# FASCICULE DE BREVET EUROPEEN

(11) **EP 2 538 292 B1**
(45) Date de publication et mention de la délivrance du brevet: **19.03.2014**
(21) Numéro de dépôt: 11170787.3
(22) Date de dépôt: 21.06.2011
(51) Int. Cl.: G05B 19/408

(54) **Mémorisation des contraintes cinématiques**
Speicherung von kinematischen Zwangsbedingungen
Memorisation of kinematic constraints

(43) Date de publication de la demande: 26.12.2012
(73) Titulaire: Tornos SA, 2740 Moutier (CH)
(72) Inventeur: Currat, Jacques, 2740 Moutier (CH)
(74) Mandataire: BOVARD AG

(56) Documents cités:
- EP-A1- 1 415 754
- EP-A1- 1 508 843
- DE-A1- 10 016 317
- DE-A1-102008 035 710
- FR-A1- 2 588 977
- US-A- 5 060 544
- US-A- 5 471 395
- US-B1- 6 456 897

## Description

### DOMAINE DE L'INVENTION

L'invention se rapporte à un procédé de pilotage d'une machine-outil pour usiner une pièce. L'invention se rapporte aussi à un programme d'ordinateur ou une commande numérique et à un dispositif pour la mise en oeuvre de ce procédé.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son ou de leurs axes. L'usinage même est effectué par des outils placés autour de la ou des broches. Le pilotage des machines-outils modernes est généralement contrôlé par une commande numérique.

La décolleteuse est une machine-outil de grande production, c'est-à-dire qu'elle est appelée à répéter plusieurs fois la même pièce. Cette particularité se traduit aussi par la possibilité d'utiliser une architecture de commande numérique différente de celle des commandes numériques traditionnelles. La différence d'architecture réside dans le besoin d'une exécution très rapide d'un même programme ou d'un même ensemble de programmes.

La présente invention se réfère à ce type de commande numérique, qui répond à ce besoin particulier des décolleteuses. L'interpolateur (calculateur de trajectoires) effectue le calcul de l'ensemble des trajectoires avant le début de l'usinage et les résultats de ces calculs sont placés par exemple dans des tables circulaires qui seront ensuite exécutées en continu par les unités de pilotage des axes et des broches. Cette méthode permet d'une part de calculer et d'optimiser les mouvements sans les contraintes temporelles des commandes numériques traditionnelles et d'autre part d'exécuter les mouvements précalculés sans nécessiter de calculs compliqués en temps réel.

Avant le commencement de l'usinage de la pièce, l'opérateur doit définir la forme des outils et de la matière, c'est-à-dire la trajectoire, de la pièce souhaitée. Par le mot trajectoire, on comprend une courbe ayant une propriété donnée. Cette courbe peut être, par exemple, un contour d'une pièce à usiner. Une fois que la trajectoire souhaitée est définie, la machine-outil peut commencer l'usinage de la pièce.

L'orientation physique des axes d'une machine-outil ne correspond pas toujours à leur orientation virtuelle, c'est-à-dire que l'axe de l'outil (une mèche par exemple) peut n'avoir aucun parallélisme avec les axes physiques.

Cette situation courante peut empêcher le retrait manuel de l'outil en cas d'interruption de l'usinage automatique. Le retrait impose un mouvement combiné de plusieurs axes et ce mouvement nécessite une interpolation, donc un mouvement programmé. L'opérateur de la machine n'aura souvent pas d'autres solutions que de démonter physiquement l'outil pour se dégager d'une telle situation.

DE 10 2008 035 710 A1 concerne un procédé de retrait automatique d'un outil après l'interruption du programme d'usinage d'une pièce, où la trajectoire de retrait de l'outil est calculé en fonction de la forme géométrique de la pièce, de la forme géométrique de l'outil et de l'espace libre calculé en fonction du procès d'usinage.

L'objet de la présente invention est de surmonter les problèmes des solutions connues.

### RESUME DE L'INVENTION

La présente invention propose donc une solution pour faciliter le travail de l'opérateur comme expliquée plus en détail plus loin.

A cet effet, l'invention a pour objet un procédé d'usinage de pièce sur une machine-outil selon la revendication 1.

La mémorisation des contraintes cinématiques possède l'avantage de connaître et de mémoriser en tout temps, les dernières contraintes cinématiques actives, permettant en cas de l'interruption de l'usinage, d'effectuer un retrait manuel de l'outil même en cas d'usinages avec des combinaisons de mouvements (mouvements non orthogonaux).

L'invention a également pour objet un programme d'ordinateur agencé pour effectuer le procédé décrit ci-dessus lorsque le programme est exécuté par un ordinateur.

L'invention a également pour objet un dispositif agencé pour effectuer le procédé décrit ci-dessus.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : un bloc-diagramme illustrant des éléments reliés à la présente invention pour usiner une pièce,
- figure 2 : un diagramme qui illustre les contraintes cinématiques de base et le changement des contraintes cinématiques, et
- figure 3 : un organigramme qui illustre le procédé pour usiner une pièce selon la présente invention.

### DESCRIPTION DETAILLEE DES MODES DE REALISATION

En se reportant aux dessins, un exemple d'un procédé pour usiner une pièce conformément à la présente invention est maintenant expliqué plus en détail.

L'objet de l'invention se compose d'un dispositif qui mémorise les contraintes cinématiques, telles qu'un plan d'usinage, au fur et à mesure de l'exécution du programme d'usinage. Les contraintes cinématiques définissent la position et l'orientation des axes des éléments impliqués dans l'usinage selon des contraintes cinématiques spécifiques. Selon un aspect de la présente invention ce dispositif comprend des moyens pour permettre de générer des mouvements manuels en relation avec les dernières contraintes cinématiques mémorisées et ainsi de donner la possibilité à l'homme de métier de retirer manuellement un outil engagé dans la matière, quelque soit les contraintes cinématiques en cours.

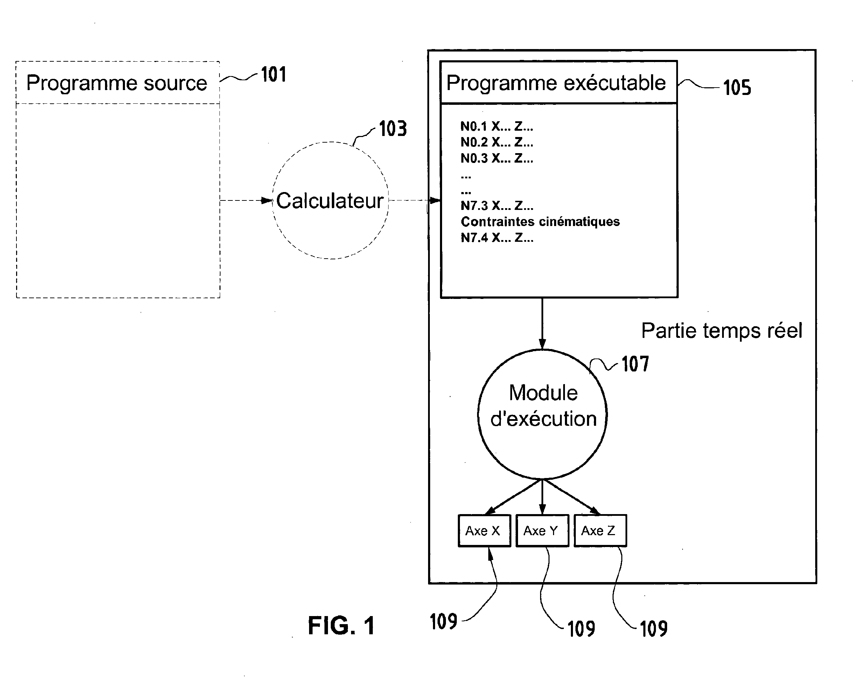

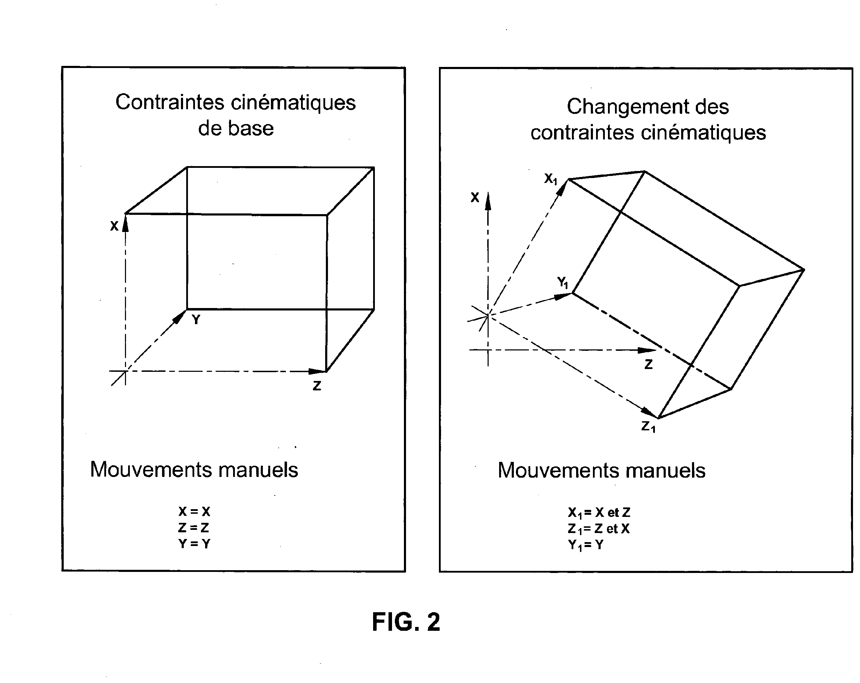

La figure 1 montre un bloc-diagramme qui illustre des éléments reliés à la présente invention. Le programme source 101 aussi appelé le code source est défini par l'opérateur. Ce programme source définit la manière comment la machine-outil effectue l'usinage. Le calculateur 103 qui comprend aussi le compilateur est agencé pour générer les informations nécessaires (le programme exécutable) à l'usinage et pour y ajouter automatiquement la définition des contraintes cinématiques à chacun de ses changements. Les contraintes cinématiques sont décrites par exemple sous la forme d'angles de rotation des vecteurs X, Y et Z telle qu'illustrée sur la figure 2. Par exemple, la rotation du plan X-Z implique que des mouvements manuels selon l'axe virtuel X1 nécessiteront le déplacement des axes physiques X et Z. En générant les informations nécessaires à l'usinage le compilateur traduit un programme source 101 écrit dans un langage de programmation en un programme exécutable 105 qui est donc le langage machine. Sur la figure 1, dans le programme exécutable 105, X et Z se référent aux axes alors que N.01, N.02, N.03, etc. se référent aux différents points dans la trajectoire (par exemple le contour de la pièce).

Un module d'exécution 107 est agencé pour exécuter le programme exécutable. Par conséquent le module d'exécution 107 donne des ordres aux outils pour se déplacer selon les différents axes 109. Le programme exécutable 105, le module d'exécution 107 et les axes 109 font partie de la « partie temps réel » de la machine-outil.

La définition de chaque jeu de contraintes cinématiques, connu du calculateur 103 puisqu'il en a besoin pour générer les trajectoires, sera automatiquement inclus et donc mémorisé dans le programme exécutable comme illustré sur la figure 1. Lors de l'usinage (exécution du programme exécutable), les contraintes cinématiques sont mémorisées. En cas d'interruption de l'usinage, la partie temps réel pourra alors se référer aux dernières contraintes cinématiques mémorisées pour en informer le calculateur qui calculera une trajectoire pour l'axe virtuel sélectionné.

Une autre manière de mémoriser les contraintes cinématiques serait de mémoriser les dernières contraintes cinématiques utilisées dans le calculateur 103. Lors d'un mouvement manuel conséquent à une interruption de l'usinage, le calculateur 103 pourra alors se référer aux dernières contraintes cinématiques mémorisées pour générer des mouvements manuels selon le système d'axe ainsi défini.

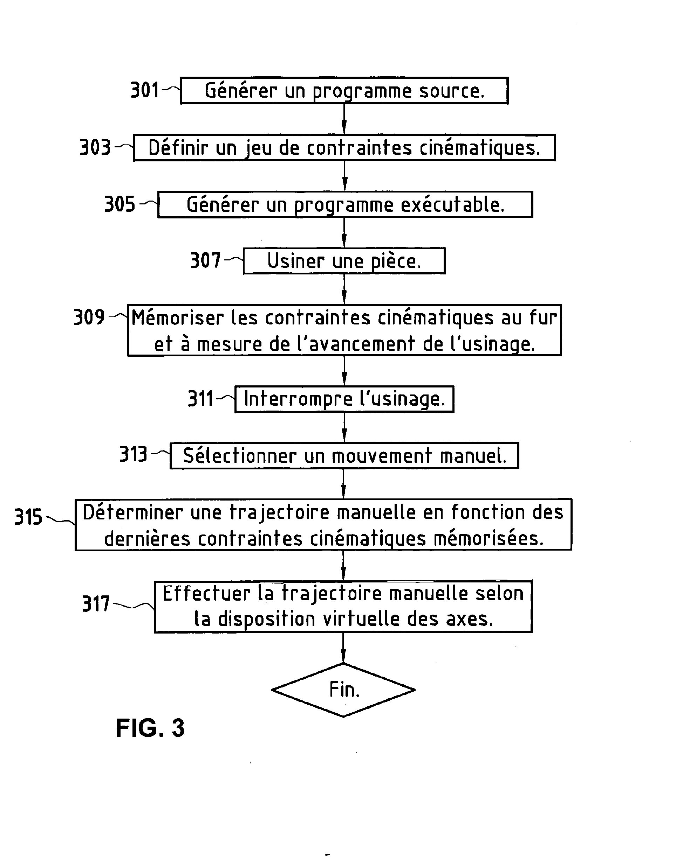

L'organigramme de la figure 3 résume le procédé décrit ci-dessus selon un exemple. A l'étape 301 l'opérateur génère le programme source 101. A l'étape, 303 le calculateur 103 définit un jeu de contraintes cinématiques. A l'étape 305, le calculateur 103 génère le programme exécutable 105. A l'étape 307, la machine-outil commence l'usinage de la pièce. A l'étape 309 on mémorise les contraintes cinématiques au fur et à mesure de l'avancement de l'usinage. Les contraintes cinématiques définies et insérées dans le programme exécutable sont donc mémorisées lors de l'exécution. Puis à l'étape 311 l'usinage est interrompu. Maintenant à l'étape 313 l'opérateur sélectionne un mouvement manuel qu'il veut effectuer (ce mouvement manuel peut par exemple être un axe physique X ou un axe virtuel X1). Puis à l'étape 315 le calculateur 103 demande les dernières contraintes cinématiques mémorisées à la partie « temps réel » pour déterminer une trajectoire manuelle en fonction des dernières contraintes cinématiques mémorisées. La trajectoire correspond donc au mouvement manuel sélectionné à l'étape 313. Ensuite à l'étape 317 la machine-outil effectue la trajectoire manuelle (donc les mouvements manuels) selon la disposition virtuelle des axes. On peut donc retirer un outil en générant des mouvements selon les dernières contraintes cinématiques.

On pourrait aussi envisager plusieurs variantes dans les configurations expliquées ci-dessus sans sortir du cadre de la présente invention, tel que défini par les revendications. Par exemple, on pourrait avoir une solution dans laquelle on a une mémoire spécifique pour mémoriser les contraintes cinématiques

## Revendications

1. Un procédé pour usiner une pièce sur une machine-outil, l'usinage étant effectué par des outils agencés pour se déplacer selon un ou plusieurs axes, le procédé comprend :
• la définition (303) des jeux de contraintes cinématiques, chaque jeu de contraintes cinématiques définissant l'orientation des axes des éléments impliqués dans l'usinage selon des contraintes cinématiques spécifiques ;
• l'usinage (307) de la pièce selon différents jeux de contraintes cinématiques ;
• la mémorisation (309) des contraintes cinématiques au fur et à mesure de l'avancement de l'usinage;
• l'arrêt ou interruption (311) de l'usinage
• la détermination (315) des dernières contraintes cinématiques ;
• la détermination (315) d'une trajectoire manuelle en fonction des dernières contraintes cinématiques mémorisées ; et
• la génération (317) de la trajectoire déterminée pour retirer un outil de la pièce.

2. Le procédé selon la revendication 1, dans lequel ledit élément est au moins un outil ou une broche.

3. Le procédé selon l'une quelconque des revendications 1 ou 2, dans lequel le procédé comprend en plus :
• la génération (301) d'un programme source (101) ; et
• la génération (305) par un calculateur (103) d'un programme exécutable (105) à partir du programme source (101) pour usiner la pièce selon le programme exécutable.

4. Le procédé selon la revendication 3, dans lequel les contraintes cinématiques sont mémorisées dans le programme exécutable (105) ou dans le calculateur.

5. Le procédé selon l'une quelconque des revendications précédentes, dans lequel le procédé comprend en plus, avant la détermination des dernières contraintes cinématiques, la sélection (313) par l'opérateur d'un mouvement manuel, et dans lequel la trajectoire correspond au mouvement manuel sélectionné.

6. Le procédé selon l'une quelconque des revendications précédentes, dans lequel le retrait est effectué sans démonter physiquement l'outil.

7. Le procédé selon l'une quelconque des revendications précédentes, dans lequel la trajectoire est générée selon la disposition virtuelle des axes.

8. Le procédé selon l'une quelconque des revendications précédentes, dans lequel les contraintes cinématiques sont décrites sous la forme de décalages selon au moins un des vecteurs X, Y et Z et/ou d'angles de rotation d'au moins un des vecteurs X, Y et Z.

9. Un programme d'ordinateur pour une machine-outil, le programme d'ordinateur étant agencé pour exécuter le procédé selon l'une quelconque des revendications précédentes lorsque le programme est exécuté sur un ordinateur.

10. Un dispositif pour usiner une pièce, l'usinage étant effectué par des outils agencés pour se déplacer selon un ou plusieurs axes, le dispositif comprend des moyens pour :
• définir des jeux de contraintes cinématiques, chaque jeu de contraintes cinématiques définissant l'orientation des axes des éléments impliqués dans l'usinage selon des contraintes cinématiques spécifiques ;
• usiner la pièce selon différents jeux de contraintes cinématiques ; et
• mémoriser les contraintes cinématiques au fur et à mesure de l'avancement de l'usinage;
• arrêter ou interrompre l'usinage ;
• déterminer les dernières contraintes cinématiques ;
• déterminer une trajectoire manuelle en fonction des dernières contraintes cinématiques mémorisées ; et
• générer la trajectoire déterminée pour retirer un outil de la pièce.

## Patentansprüche

1. Ein Verfahren zur Bearbeitung eines Werkstücks auf einer Werkzeugmaschine, wobei die Bearbeitung durch Werkzeuge ausgeführt wird, die dazu ausgebildet sind, selbst entlang einer oder mehrere Achsen zu verfahren, wobei das Verfahren aufweist :
• Die Bestimmung (303) von Sätzen kinematischer Bedingungen, wobei jeder Satz kinematischer Bedingungen die Orientierung von Achsen von Elementen definiert, die an der Bearbeitung entsprechend spezifischer kinematischer Bedingungen mitwirken;
• Die Bearbeitung (307) des Werkstücks entsprechend verschiedener Sätze kinematischer Bedingungen;
• Das Speichern (309) der kinematischen Bedingungen während des Fortgangs der Bearbeitung;
• Das Anhalten oder Unterbrechen (311) der Bearbeitung;
• Die Bestimmung (315) der letzten kinematischen Bedingungen;
• Die Bestimmung (315) eines manuellen Pfades in Übereinstimmung mit den letzten gespeicherten kinematischen Bedingungen; und
• Das Erzeugen (317) des bestimmten Pfades für ein Zurückbewegen eines Werkszeuges von dem Werkstück.

2. Das Verfahren nach Anspruch 1, wobei das Element wenigstens ein Werkzeug oder eine Welle ist.

3. Das Verfahren nach einem der Ansprüche 1 oder 2, wobei das Verfahren weiter aufweist :
• Das Erzeugen (301) eines Quellprogramms (101); und
• Das Erzeugen (305) eines ausführbaren Programms (105) beginnend von dem Quellprogram (101) durch einen Computer (103) zur Bearbeitung des Werkstücks gemäss dem ausführbaren Programm.

4. Das Verfahren nach Anspruch 3, wobei die kinematischen Bedingungen in einem ausführbaren Programm (105) oder in dem Computer gespeichert sind.

5. Das Verfahren nach einem der vorhergehenden Ansprüche, wobei das Verfahren weiter die Auswahl (313) einer manuellen Bewegung durch einen Arbeiter aufweist, bevor die letzten kinematischen Bedingungen bestimmt werden, und wobei der Pfad den ausgewählten manuellen Bewegung entspricht.

6. Das Verfahren nach einem der vorhergehenden Ansprüche, wobei das Zurückbewegen ohne ein physisches Ausbauen des Werkzeugs ausgeführt wird.

7. Das Verfahren nach einem der vorhergehenden Ansprüche, wobei der Pfad gemäss der virtuellen Anordnung von Achsen erzeugt wird.

8. Das Verfahren nach einem der vorhergehenden Ansprüche, wobei die kinematischen Bedingungen in der Form von Verschiebungen gemäss wenigstens einem der Vektoren X, Y und Z beschrieben werden und/oder durch Rotationswinkel wenigstens eines der Vektoren X, Y, und Z beschrieben werden.

9. Ein Computerprogramm für eine Werkzeugmaschine wobei das Computerprogramm zum Ausführen des Verfahrens nach einem der vorhergehenden Ansprüche ausgelegt ist, wenn das Programm auf einem Computer ausgeführt wird.

10. Eine Vorrichtung zur Bearbeitung eines Werkstücks, wobei die Bearbeitung durch Werkzeuge ausgeführt wird, wobei die Vorrichtung aufweist :
• Mittel zur Bestimmung von Sätzen kinematischer Bedingungen, wobei jeder Satz kinematischer Bedingungen die Orientierung von Achsen von Elementen bestimmt, die an der Bearbeitung entsprechend bestimmter kinematischer Bedingungen mitwirken;
• Mittel zur Bearbeitung des Werkstücks entsprechend verschiedene Sätze von kinematischen Bedingungen; und
• Mittel zum Speichern der kinematischen Bedingungen während des Fortgangs der Bearbeitung;
• Mittel zum Anhalten oder Unterbrechen der Bearbeitung;
• Mittel zum Bestimmen der letzten kinematischen Bedingungen;
• Mittel zum Bestimmen eines manuellen Pfads in Übereinstimmung mit den letzten gespeicherten kinematischen Bedingungen; und
• Mittel zum Erzeugen des bestimmten Pfades für ein Zurückbewegen eines Werkzeugs von dem Werkstück.

## Claims

1. A method for machining a workpiece on a machine tool, the machining being carried out by tools designed to displace themselves along one or more axes, the method comprising:
• the definition (303) of sets of kinematic constraints, each set of kinematic constraints defining the orientation of axes of elements involved in the machining according to specific kinematic constraints;
• the machining (307) of the workpiece according to different sets of kinematic constraints;
• the storing (309) of the kinematic constraints as the machining progresses;
• the stopping or interruption (311) of the machining;
• the determination (315) of the last kinematic constraints;
• the determination (315) of a manual path in accordance with the last stored kinematic constraints; and
• the generation (317) of the determined path for withdrawing a tool from the workpiece.

2. The method according to claim 1, wherein the said element is at least one tool or one spindle.

3. The method according to any one of the claims 1 or 2, wherein the method further comprises:
• the generation (301) of a source program (101) ; and
• the generation (305) by a computer (103) of an executable program (105) starting from the source program (101) for machining the workpiece according to the executable program.

4. The method according to claim 3, wherein the kinematic constraints are stored in a executable program (105) or in the computer.

5. The method according to any one of the preceding claims,
wherein the method further comprises, before the determination of the last kinematic constraints, the selection (313) by the operator of a manual movement, and wherein the path corresponds to the selected manual movement.

6. The method according to any one of the preceding claims,
wherein the withdrawal is carried out without physically dismantling the tool.

7. The method according to any one of the preceding claims,
wherein the path is generated according to the virtual disposition of axes.

8. The method according to any one of the preceding claims,
wherein the kinematic constraints are described in the form of shifts according to at least one of the vectors X, Y and Z and/or of angles of rotation of at least one of the vectors X, Y and Z.

9. A computer program for a machine tool, the computer program being designed to execute the method according to any one of the preceding claims when the program is executed on a computer.

10. A device for machining a workpiece, the machining being carried out by tools designed to displace themselves along one or more axes, the device comprising means:
• to define sets of kinematic constraints, each set of kinematic constraints defining the orientation of axes of elements involved in the machining according to specific kinematic constraints;
• to machine the workpiece according to different sets of kinematic constraints; and
• to store the kinematic constraints as the machining progresses;
• to stop or interrupt the machining;
• to determine the last kinematic constraints;
• to determine a manual path in accordance with the last stored kinematic constraints; and
• to generate the determined path for withdrawing a tool from the workpiece.
